# FASCICULE DE BREVET EUROPEEN

(11) **EP 3 348 048 B1**
(45) Date de publication et mention de la délivrance du brevet: **28.10.2020**
(21) Numéro de dépôt: 16785184.9
(22) Date de dépôt: 08.09.2016
(51) Int. Cl.: H04N 13/232, H04N 5/225, G03B 35/08

(54) **CAMÉRA PLÉNOPTIQUE**
PLENOPTISCHE KAMERA
PLENOPTIC CAMERA

(30) Priorité: 08.09.2015 FR 1558338
(43) Date de publication de la demande: 18.07.2018
(73) Titulaire: SAFRAN, 75015 Paris (FR)
(72) Inventeur: LE GUILLOUX, Yann, 77550 Moissy-Cramayel (FR); PICARD, Sylvaine, 77550 Moissy-Cramayel (FR)
(74) Mandataire: Regimbeau
(86) Numéro de dépôt international: PCT/FR2016/052242
(87) Numéro de publication internationale: WO 2017/042494

(56) Documents cités:
- WO-A2-2006/078537
- GB-A- 2 501 936
- US-A1- 2006 192 869
- US-A1- 2014 327 763
- US-A1- 2015 077 600

## Description

### DOMAINE DE L'INVENTION

La présente invention se rapporte au domaine de la reconstruction 3D à partir d'images 2D et en particulier aux caméras plénoptiques qui permettent d'acquérir une scène en 3D.

### ETAT DE LA TECHNIQUE

La reconstruction 3D à partir d'images 2D consiste à obtenir une représentation en trois dimensions d'un objet ou d'une scène à partir d'un ensemble d'images 2D de l'objet ou de la scène prises sous différents points de vue.

D'une manière plus générale, on dispose d'une ou plusieurs représentations en 2D d'un objet et on souhaite déterminer les coordonnées des éléments visibles sur ces représentations dans un repère de l'espace réel 3D.

Les points visibles sur les images sont les projections des points réels qu'on peut alors situer sur des droites. Si deux ou plusieurs vues de l'objet sont prises, la position dans l'espace des points réels peut alors être obtenue par intersection de ces droites (ou triangulation).

Il est connu d'utiliser une caméra plénoptique 1 pour acquérir des images 2D prises sous différents points de vue de l'objet ou de la scène.

Utiliser une caméra plénoptique 1 présente l'avantage d'avoir un montage relativement simple à réaliser et ne nécessitant qu'une seule caméra. De plus, par principe, les paramètres de calibration extrinsèques sont connus.

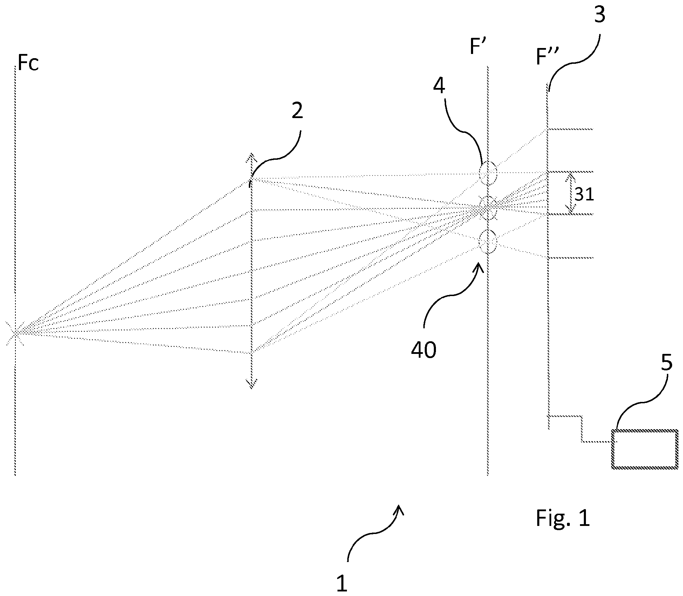

Comme illustré sur la figure 1, une caméra plénoptique 1 capture des informations concernant la distribution d'orientation des rayons lumineux entrant dans la caméra 1. Comme une caméra classique, cette caméra 1 comprend une lentille principale 2 qui reçoit de la lumière à partir d'objets placés dans un champ objet et dirige la lumière reçue sur un plan image de la caméra 1. Cette caméra 1 échantillonne le champ lumineux.

Dans ce plan image de la lentille 2 est placé un réseau 40 de microlentilles 4. Ainsi, le centre de chaque microlentille reçoit tous les rayons issus du point objet conjugué de ce centre, ces rayons correspondant à des directions différentes. La microlentille répartit alors sur plusieurs pixels d'un capteur photosensible 3 les rayons de directions différentes. On a donc échantillonné le champ lumineux en position et en orientation. Chaque pixel reçoit ainsi de la lumière d'un rayon unique, L'association entre pixel et rayons est essentielle pour la reconstruction tridimensionnelle.

L'image prise par le capteur photosensible 3 contient donc l'information suffisante pour former des images vues selon des points de vue différents.

Les pixels recevant la lumière issue d'une même microlentille 4 forment un groupe appelé macropixel.

Pour déterminer les coordonnées 3D d'un point de l'espace objet, il faut que celui-ci soit imagé par au moins deux pixels du capteur photosensible, donc sous deux orientations différentes. Pour pouvoir distinguer deux points contigus de l'espace objet, il faut que ceux-ci soient imagés sur des couples de pixels différents.

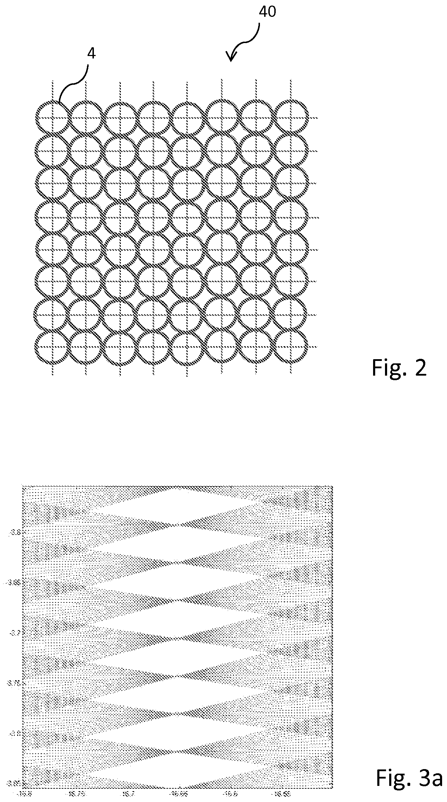

Comme illustré en figure 2, pour minimiser l'espace aveugle entre les microlentilles 4, les microlentilles 4 sont alignées en réseau régulier, la distance entre deux microlentilles 4 voisines étant constante dans au moins deux directions. En particulier, les microlentilles 4 peuvent être disposées en lignes et en colonnes régulièrement espacées.

On connait aussi des capteurs dont les microlentilles ne sont pas alignés selon des lignes et des colonnes, mais forment un assemblage de petites matrices (par exemple 3 par 3) périodique. Un exemple est donné par le document US2014/0327763 A1, qui utilise en plus des lentilles de tailles différentes.

Or, de par la régularité du réseau de microlentilles 4, certains points de l'espace objet sont imagés par plus de deux pixels, tandis que certaines zones ne sont imagées par aucun pixel ou par un seul pixel. Ces zones sont des zones aveugles dans l'espace objet pour la reconstruction.

La figure 3a permet de visualiser ce phénomène. La figure 3a correspond à une portion de l'espace objet dans lequel ont été tracés les chemins optiques des faisceaux incidents sur chaque pixel du capteur photosensible 3. Les points d'intersections (marqués par des croix) entre ces faisceaux correspondent donc aux points de l'espace objet qui sont imagés sur au moins deux pixels. Comme, on peut le voir sur la figure 3a, les intersections sont mal réparties dans l'espace objet. Il existe des plans (comme les plans -16.8 et -16.5 sur la figure 3a) dans lesquels la densité d'intersections est importante, mais il existe aussi de nombreux plans (comme le plan 16.65) dans lesquels la densité d'intersections est faible, et de larges zones voisines de ces plans dans lesquels il n'y a aucune intersection (comme la zone comprise entre les plans -16.75 et -16.65 sur la figure 3a), autrement dit des zones qui ne sont pas imagées sur au moins deux pixels. Ceci est notamment dû à l'existence de nombreuses intersections multiples, qui correspondent à des points de l'espace qui sont imagés sur plus de deux pixels.

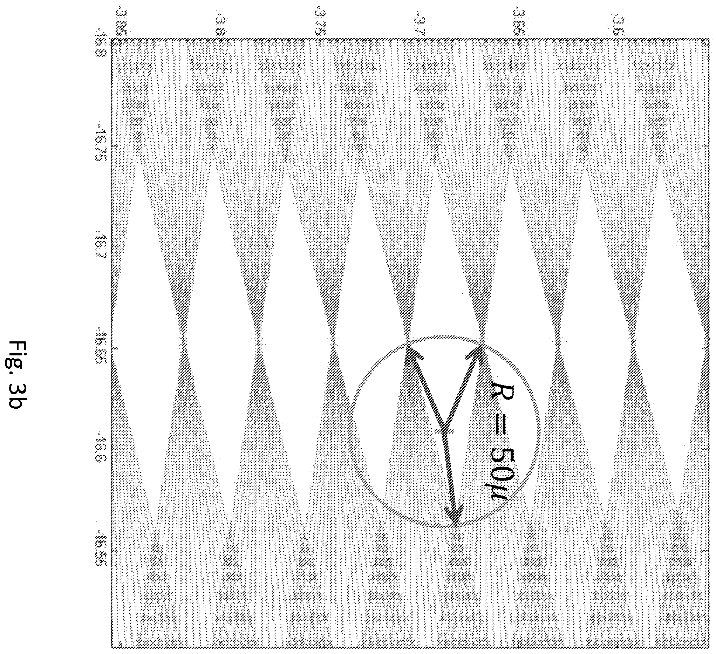

La figure 3b illustre le fait qu'il existe des points dont la distance à l'intersection la plus proche est de l'ordre de 50 micromètres.

On connait également de l'art antérieur, des caméras plénoptiques dont la matrice de microlentilles est rendue aléatoire en décalant chaque lentille latérallement. Un exemple est donné dans le document GB 2501936 A. Ce décalage aléatoire implique cependant qu'il n'y a plus de lignes ni de colonnes pour les microlentilles.

Le pouvoir de résolution d'une caméra plénoptique, défini comme la distance minimale qui doit séparer deux points contigus pour qu'ils soient imagés sur des couples de pixels différents, dépend de la distribution des intersections dans l'espace objet. Les caméras plénoptiques de l'art antérieur ont donc une bonne résolution dans certains plans, en revanche, elles ont une mauvaise résolution globale dans l'espace.

### EXPOSE DE L'INVENTION

Un but de l'invention est de proposer une caméra plénoptique ayant une meilleure résolution dans l'espace que les dispositifs de l'art antérieur.

Ce but est atteint dans le cadre de la présente invention grâce à une caméra plénoptique comprenant un système optique qui reçoit de la lumière issue d'un champ objet dans lequel est un espace objet destiné à être traité via la caméra, un capteur photosensible matriciel qui est composé de pixels arrangés en lignes et colonnes et tel que chaque pixel reçoit la lumière d'un seul rayon lumineux via le système optique.

Ladite camera a son optique qui comprend une optique de focalisation et un réseau d'éléments optiques qui sont positionnés dans un plan image situé entre l'optique de focalisation et le capteur photosensible.

Chaque élément optique forme sur le capteur photosensible une image macropixel en faisant correspondre à chaque pixel son rayon lumineux associé.

Dans la caméra, les éléments optiques sont arrangés en lignes et en colonnes parallèles respectivement aux lignes et colonnes du capteur matriciel en formant les intersections dans le champ objet,

Dans la caméra, la distance qui sépare deux lignes adjacentes du réseau d'éléments optiques et/ou la distance qui sépare deux colonnes adjacentes du réseau d'éléments optiques est irrégulière dans ledit réseau, cette distance étant distincte pour au moins deux paires de lignes adjacentes et/ou deux paires de colonnes adjacentes du réseau d'éléments optiques, l'irrégularité en distance de séparation permettant de minimiser la plus grande distance entre tout point de l'espace objet et la plus proche desdites intersections de ces rayons lumineux.

La distances entre deux lignes adjacentes, respectivement deux colonnes, est dite irrégulière si on ne peut la déduire de la connaissance de toutes les autres distances entre lignes adjacentes, respectivement colonnes, ou bien s'il faut connaitre la distance entre au moins vingt lignes, respectivement vingt colonnes, adjacentes pour la déduire.

Dans un mode de réalisation avantageux, la distance entre deux colonnes (respectivement lignes) est fixée aléatoirement, notamment en utilisant un tirage selon une loi uniforme sur un intervalle prédéterminé.

Il n'y a alors pas de périodicité observable dans l'agencement des colonnes (respectivement des lignes).

On considère que la distance qui sépare deux colonnes (ou lignes) adjacentes du réseau d'éléments optiques est irrégulière à partir du moment où l'écart entre une valeur et la valeur moyenne est supérieur à 2% de la valeur moyenne (cette condition est néanmoins non suffisante).

Par rapport à la configuration de l'art antérieur, dans laquelle les éléments optiques sont alignés en lignes et en colonnes régulièrement espacées ou sont disposés en matrice selon des motifs périodiques, il existe moins de points de l'espace objet qui seront imagés sur plus de deux pixels, mais plus de points de l'espace objet qui seront imagés sur au moins deux pixels. C'est cet espace objet qui est avantageusement traité via la caméra.

Comme il suffit qu'un point de l'espace objet soit imagé sur deux pixels pour déterminer sa position dans l'espace, l'invention permet donc d'améliorer la résolution de reconstruction tridimensionnelle d'une caméra plénoptique.

En outre, les points de l'espace imagés sur au moins deux pixels sont répartis de manière plus homogène dans l'espace, ce qui permet d'avoir une meilleure résolution globale dans l'espace.

D'une part, les rayons lumineux associés à leur pixel forment des intersections dans ledit espace objet et d'autre part l'optique est réalisée de façon à minimiser la plus grande distance entre tout point de l'espace objet et la plus proche desdites intersections de ces rayons lumineux.

L'invention est avantageusement complétée par les caractéristiques suivantes, prises individuellement ou en l'une quelconque de leurs combinaisons techniquement possibles.

Ni la distance entre deux lignes adjacentes, ni la distance entre deux colonnes adjacentes n'est constante. Ainsi, dans cette réalisation, le réseau d'éléments optiques présente des irrégularités à la fois quant à la distance qui sépare deux lignes adjacentes du réseau et quant à la distance qui sépare deux colonnes adjacentes. Le fait que le réseau d'éléments optiques comporte des irrégularités dans deux directions permet encore d'améliorer la répartition des points de l'espace imagés sur plus de deux pixels.

La distance entre deux lignes adjacentes et/ou deux colonnes adjacentes peut par exemple être choisie de manière aléatoire. Préférentiellement cette distance est dans une gamme de valeurs comprise entre 95% et 105% d'une valeur moyenne. Les tests effectués par les inventeurs ont permis de déterminer que cette configuration permettait une résolution accrue de la caméra plénoptique.

D'une part l'image macropixel formée sur le capteur photosensible s'étend sur au moins deux pixels dans la direction verticale et/ou dans la direction horizontale et d'autre part la distance irrégulière dans ledit réseau sépare deux lignes adjacentes du réseau d'éléments optiques en correspondance de leurs images macropixels d'au moins deux pixels dans la direction verticale et/ou sépare deux colonnes adjacentes du réseau d'éléments optiques en correspondance de leurs images macropixels d'au moins deux pixels dans la direction horizontale.

Les éléments optiques sont des microlentilles ou des sténopés.

L'association entre rayon et pixel est choisie dynamiquement dans un ensemble d'associations possibles et permet d'obtenir une image ou plusieurs images du champ objet.

Un ensemble d'éléments pilotables d'obturation positionné en regard des éléments optiques permet la sélection dynamique d'un rayon unique pour chaque pixel en permettant la sélection d'une association dans l'ensemble d'associations possibles, les images étant formées par les éléments optiques sur le détecteur et pouvant présenter des recouvrements.

Ainsi, on conçoit d'abord une configuration d'éléments optiques, présentant éventuellement des recouvrements entre les macropixels, et on place, devant ou derrière le plan du réseau d'éléments optiques, un masque matriciel. En commandant l'état des cellules du masque matriciel, on modifie dynamiquement les rayons issus des éléments optiques afin de répartir les intersections dans l'espace.

L'association entre rayon et pixels est bi-univoque pour au moins 2 bandes spectrales, les associations correspondant à ces bandes spectrales différant pour au moins 1 pixels.

Un ensemble d'éléments de filtrage chromatique positionné en regard des éléments optiques assure l'unicité du rayon correspondant à chaque pixel dans chacune des bandes spectrales, permettant d'obtenir une image ou plusieurs images du champ objet, les images formées par les éléments optiques sur le détecteur pouvant présenter des recouvrements.

Ainsi, on passe dynamiquement d'une configuration à une autre, en changeant la longueur d'onde de l'éclairage pour le faire correspondre à la longueur d'onde des filtres positionnés devant le réseau d'éléments optiques correspondant à la configuration voulue.

En considérant la réalisation différemment, on peut prévoir que la caméra plénoptique comporte deux réseaux d'éléments optiques contenus dans un même plan, un filtre chromatique ne laissant passer que les longueurs d'ondes dans une première bande de fréquence étant positionné devant les éléments optiques du premier réseau, un filtre passe bande ne laissant passer que les longueurs d'ondes dans une seconde bande de fréquence différente de la première bande de fréquence étant positionné devant les éléments optiques du second réseau.

L'invention propose également un dispositif d'acquisition tridimensionnel, comportant une caméra plénoptique comme décrit plus haut et un calculateur configuré pour déterminer, à partir de l'image fournie et/ou d'une série d'images fournies par la caméra plénoptique, une distance entre un point du champ objet et la caméra plénoptique.

L'invention propose également un procédé de calibration d'une caméra plénoptique comme décrit plus haut, comportant des étapes consistant à :
- allumer un seul point du champ objet ;
- répertorier les pixels du capteur photosensible éclairés ;
- associer au point du champ objet les pixels du capteur photosensible éclairés ;
- répéter les étapes précédentes pour un échantillon de points du champ objet.

L'invention propose également l'utilisation d'un dispositif d'acquisition tridimensionnel comme décrit plus haut pour le contrôle de forme et en particulier pour le contrôle de la forme d'une aube de turbomachine.

### DESCRIPTION DES FIGURES

D'autres objectifs, caractéristiques et avantages sortiront de la description détaillée qui suit en référence aux dessins donnés à titre illustratif et non limitatif parmi lesquels :
- la figure 1, discutée plus haut, illustre une caméra plénoptique de l'art antérieur ;
- la figure 2, discutée plus haut, est une vue de face d'un réseau de microlentilles de l'art antérieur ;
- la figure 3a, discutée plus haut, illustre la répartition dans l'espace objet des intersections des rayons pour une caméra plénoptique de l'art antérieur ;
- la figure 3b est un agrandissement de la figure 3a, illustrant des distances des points d'intersection ;
- la figure 4 illustre une caméra plénoptique conforme à un mode de réalisation de l'invention ;
- la figure 5 est une vue de face d'un réseau de microlentilles conforme à un mode de réalisation de l'invention ;
- la figure 6a illustre la répartition dans l'espace objet des intersections des rayons pour une caméra plénoptique conforme à l'invention ;
- la figure 6b est un agrandissement de la figure 6a, illustrant des distances réduites des points d'intersection par rapport à l'illustration de la figure 3b ;
- la figure 7 illustre une caméra plénoptique comportant un masque matriciel conformément à un mode de réalisation de l'invention ;
- la figure 8 une caméra plénoptique comportant des filtres chromatiques conformément à un mode de réalisation de l'invention.

### DESCRIPTION DETAILLEE DE L'INVENTION

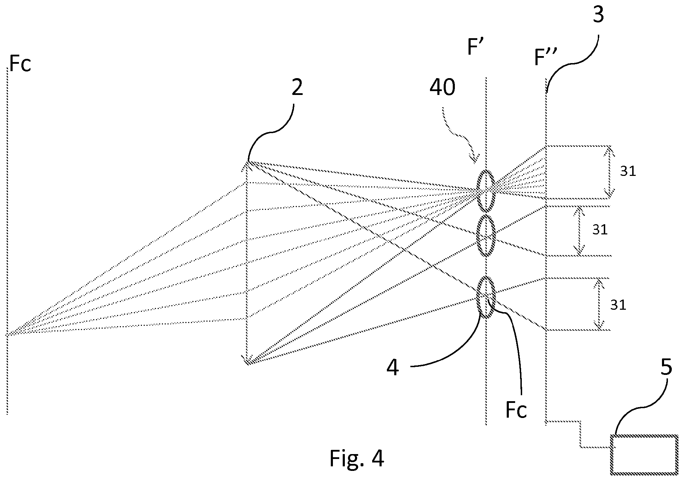

Comme illustré sur la figure 4, une caméra plénoptique 1 comprend usuellement une optique de focalisation 2, un capteur photosensible 3, et un réseau d'éléments optiques 40. Un système optique comprend l'optique de focalisation 2 et le réseau d'éléments optiques 40.

L'optique de focalisation 2 est classiquement une lentille optique ou une combinaison de lentilles optiques, qui reçoit de la lumière à partir d'objets placés dans un champ objet.

La caméra plénoptique 1 a ses éléments optiques 40 disposés dans un plan image F' de la caméra plénoptique entre l'optique de focalisation 2 et le capteur photosensible 3, et parallèle au capteur.

Le capteur photosensible 3 est situé au niveau d'un plan référencé F" dans les exemples qui sont aux figures. Chaque élément optique 4 forme sur le capteur photosensible 3 une image de l'optique de focalisation 2.

Comme illustré sur la figure 4, un point compris dans le plan Fc du plan des éléments optiques est imagé par une seule microlentille constituant un seul élément optique 4. Les paramètres de la caméra, en particulier la distance focale de l'optique de focalisation 2 et celle des microlentilles 4 sont choisis de manière à ce que les images formées par les microlentilles sur le capteur photosensible 3 ne se recouvrent pas. Les pixels recevant la lumière issue d'un même élément optique 4 forment un groupe appelé macropixel et chaque élément optique 4 forme sur le capteur photosensible 3 une image macropixel s'étendant sur au moins deux pixels pour ledit groupe, dans la direction horizontale et/ou dans la direction verticale.

Le capteur photosensible 3 est matriciel en étant composé de pixels arrangés en lignes et colonnes et tel que chaque pixel reçoit la lumière d'un seul rayon lumineux via le système optique.

L'image prise par le capteur photosensible 3 contient donc l'information suffisante pour former des images vues selon des points de vue différents. Le réseau d'éléments optiques 40 est placé à une faible distance (de l'ordre de 0,5 mm) du capteur photosensible 3.

Les éléments optiques 4 peuvent notamment être des microlentilles, ou des sténopés. Dans le cas où les éléments optiques 4 sont des microlentilles, celles-ci peuvent être sphériques ou avoir une forme plus complexe permettant une jonction entre deux microlentilles 4 adjacentes. Les microlentilles ont typiquement un diamètre de l'ordre d'une fraction de millimètre.

Dans le cas où les éléments optiques 4 sont des sténopés, le réseau d'éléments optiques 40 est une surface plane opaque dans laquelle sont ménagés des trous de très faible diamètre, typiquement espacés de l'ordre d'une fraction de millimètre.

Le capteur photosensible 3 capte la lumière reçue pour produire une image. Le capteur photosensible 3 est un capteur matriciel et typiquement une matrice CCD. Le capteur photosensible 3 est un composant électronique photosensible composé de photosites adaptés pour convertir un rayonnement électromagnétique (UV, visible ou IR) en un signal électrique analogique. Ce signal est ensuite numérisé par un convertisseur analogique-numérique pour obtenir une image numérique composée de pixels, chaque pixel correspondant à un photosite du capteur photosensible 3.

Comme illustré sur la figure 4, les éléments optiques 4 sont disposés de manière coplanaire, dans un plan sensiblement parallèle au plan du capteur photosensible 3.

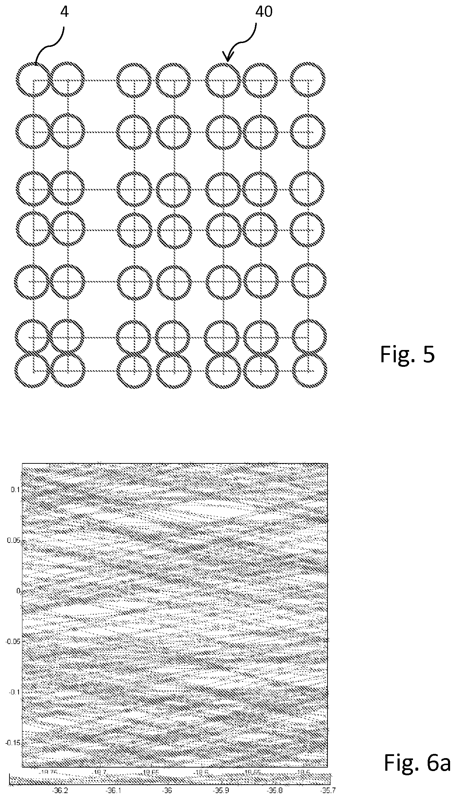

Comme illustré sur la figure 5, les éléments optiques 4 sont disposés de manière à ce que leurs centres optiques soient alignés en lignes et en colonnes. Le centre optique d'un élément optique est le point particulier d'un élément optique tel qu'un rayon lumineux incident en ce point n'est pas dévié, ses parties incidentes et émergentes étant parallèles entre elles.

Dans le cas où les éléments optiques 4 sont des microlentilles, le centre optique de la microlentille est le point d'intersection entre le plan de la microlentille et l'axe optique.

Dans le cas où les éléments optiques 4 sont des sténopés, le centre optique du sténopé est le centre du trou.

Dans un premier mode de réalisation, la distance entre deux lignes adjacentes n'est pas constante, tandis que la distance entre deux colonnes est constante, ou de façon alternative, la distance entre deux lignes adjacentes est constante, mais la distance entre deux colonnes n'est pas constante.

Dans un second mode de réalisation, ni la distance entre deux lignes adjacentes, ni la distance entre deux colonnes adjacentes, ne sont constantes.

La distance entre deux lignes adjacentes et celle entre deux colonnes est typiquement inférieure au millimètre.

La distance entre deux lignes adjacentes et/ou celle entre deux colonnes adjacentes est typiquement choisie dans une gamme de valeur comprise entre + et - 5% d'une valeur moyenne.

Alternativement, la distance entre deux lignes adjacentes et/ou celle entre deux colonnes adjacentes est typiquement choisie dans une gamme de valeur comprise entre + et - 10% d'une valeur moyenne.

La distances entre deux lignes adjacentes, respectivement deux colonnes, est irrégulière si on ne peut pas la déduire de la connaissance de toutes les autres distances entre lignes adjacentes, respectivement colonnes, ou bien s'il faut connaitre la distance entre au moins vingt lignes, respectivement vingt colonnes, adjacentes pour la déduire.

La distance entre deux lignes adjacentes et/ou entre deux colonnes adjacentes, peut par exemple être choisie de manière aléatoire. On entend par là que dans ce cas, la répartition des distances entre deux lignes adjacentes et/ou entre deux colonnes adjacentes ne possède aucune structure, régularité, ou règle de prédiction identifiable, autrement dit que la distance entre deux lignes adjacentes et/ou entre deux colonnes adjacentes est tirée au hasard. En effet, les tests effectués par les inventeurs ont permis de déterminer que cette configuration permettait une résolution de reconstruction tridimensionnelle accrue de la caméra plénoptique.

La distance entre deux lignes adjacentes et/ou celle entre deux colonnes adjacentes est typiquement choisie aléatoirement dans une gamme de valeur comprise entre + et - 5% autour d'une valeur moyenne.

Alternativement, la distance entre deux lignes adjacentes et/ou celle entre deux colonnes adjacentes est choisie aléatoirement dans une gamme de valeur comprise entre + et - 10% d'une valeur moyenne.

Un mode de réalisation avantageux consiste donc à déterminer aléatoirement la distance entre deux colonnes (respectivement lignes), notamment en utilisant un tirage selon une loi uniforme sur un intervalle de valeurs prédéterminé. En d'autres termes, ladite distance est fonction d'une valeur aléatoire.

Un exemple concret de position irrégulière est à présent donné.

On veut placer K colonnes de microlentilles de rayon R. On choisit la position P1 de la première colonne de façon arbitraire. Pour les K-1 autres microlentilles on tire aléatoirement une valeur V entre [0, δ] selon une loi uniforme et on place le centre de la lentille courante pour qu'il soit distant du centre de la lentille précédente de 2R+V. La distance entre deux lentilles ne peut être déduite de la distance entre les autres lentilles car elle dépend de la variable aléatoire V tirée uniformément sur le voisinage [0, δ].

Il n'y a alors pas de périodicité observable dans l'agencement des colonnes (respectivement des lignes).

La figure 6a correspond à une portion de l'espace objet dans laquelle ont été tracés les rayons lumineux correspondant à tous les pixels. Les points (marqués par des croix) d'intersections entre ces rayons correspondent aux points de l'espace objet qui sont imagés sur au moins deux pixels. Comme, on peut le voir sur la figure 6a, les intersections sont réparties de manière plus homogène dans l'espace, ce qui permet d'avoir une meilleure résolution globale dans l'espace.

Par rapport à une configuration dans laquelle les éléments optiques sont alignés en lignes et en colonnes régulièrement espacées, il existe moins de points de l'espace objet qui seront imagés sur plus de deux pixels, mais plus de points de l'espace objet qui seront imagés sur au moins deux pixels.

Comme il suffit qu'un point de l'espace objet soit imagé sur deux pixels pour pouvoir déterminer sa position dans l'espace, l'invention permet donc d'améliorer la résolution de reconstruction tridimensionnelle d'une caméra plénoptique.

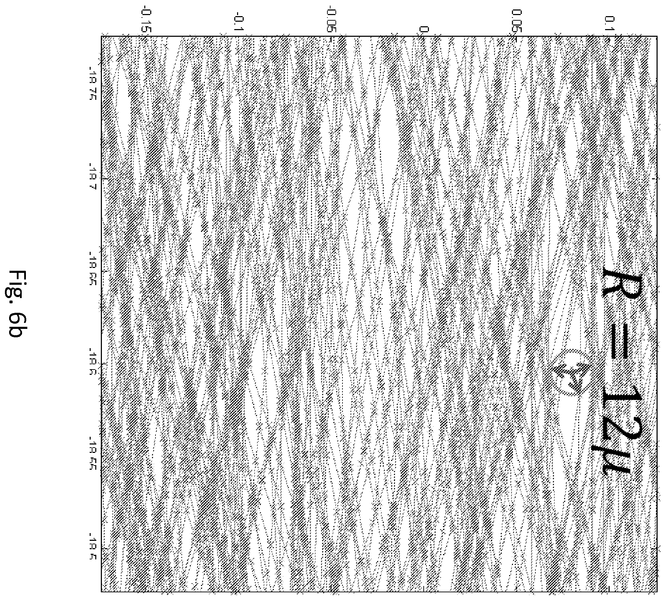

La figure 6b, agrandissement de la figure 6a, illustre que le point du volume le plus éloigné de toute intersection n'est situé qu'à 12 micromètres de l'intersection la plus proche. La résolution de reconstruction tridimensionnelle est donc nettement meilleure.

La disposition des éléments optiques 4 est avantageusement modifiée de façon dynamique pour pouvoir s'adapter à des situations particulières.

En effet, la disposition des éléments optiques 4 détermine le positionnement des intersections, et donc la résolution de la mesure tridimensionnelle dans l'espace. On choisira donc la configuration du réseau d'éléments optiques 40 en fonction de la répartition des intersections recherchée. Notamment, une configuration peut générer une forte concentration d'intersections dans une zone particulière de l'espace et sera particulièrement intéressante pour acquérir un objet contenu dans cette zone de l'espace.

Avantageusement, le système optique traite la lumière issue du champ objet dans lequel est l'espace objet traité via la caméra. D'une part les rayons lumineux associés à chacun à leur pixel forment des intersections dans ledit espace objet et d'autre part l'optique est réalisée de façon à minimiser la plus grande distance entre tout point de l'espace objet et la plus proche desdites intersections de ces rayons lumineux.

Chaque élément optique 4 forme sur le capteur photosensible 3 une image macropixel s'étendant sur au moins deux pixels dans la direction verticale et/ou dans la direction horizontale en faisant correspondre à chaque pixel son rayon lumineux associé. Les éléments optiques 4 sont alignés arrangés en lignes et en colonnes parallèles respectivement aux lignes et colonnes du capteur matriciel 3 en formant les intersections dans le champ objet.

La distance qui sépare deux lignes adjacentes du réseau d'éléments optiques en correspondance de leurs images macropixels d'au moins deux pixels dans la direction verticale et/ou la distance qui sépare deux colonnes adjacentes du réseau d'éléments optiques en correspondance de leurs images macropixels d'au moins deux pixels dans la direction horizontale est irrégulière dans ledit réseau. Cette irrégularité dans lesdites distances séparant lesdites lignes et/ou colonnes permet de minimiser la plus grande distance entre tout point de l'espace objet et la plus proche desdites intersections de ces rayons lumineux,

Pour modifier la configuration des éléments optiques 4, on peut déplacer les éléments optiques 4. Un déplacement des éléments optiques 4 peut notamment être obtenu à l'aide d'actionneurs adaptés pour déplacer indépendamment chaque élément optique 4.

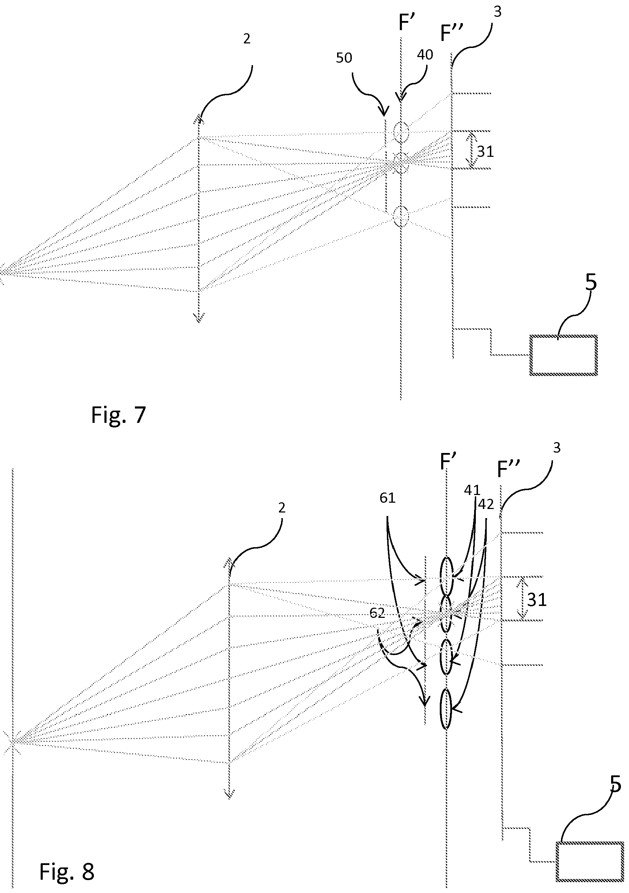

On peut aussi utiliser un masque matriciel 50 positionné devant ou derrière le réseau d'éléments optiques 40, comme illustré sur la figure 7, et constitué de cellules pouvant être commandés indépendamment les unes des autres pour laisser passer ou non la lumière, comme par exemple un écran à cristaux liquides.

Ainsi, on conçoit d'abord une configuration d'éléments optiques 4, présentant éventuellement des recouvrements entre les macropixels, et on place, devant ou derrière le plan du réseau d'éléments optiques 40, un masque matriciel 50.

En commandant l'état des cellules du masque matriciel 50, on modifie dynamiquement les rayons issus des éléments optiques 40 afin d'interdire à plus d'un rayon de parvenir sur chaque pixel et de répartir les intersections dans l'espace.

En combinant les images obtenues pour plusieurs états du masquage, on enrichit l'ensemble des intersections des rayons et on améliore la résolution de reconstruction tridimensionnelle.

Avantageusement, l'association entre rayon et pixel est choisie dynamiquement dans un ensemble d'associations possibles et permet d'obtenir une image ou plusieurs images du champ objet.

Avantageusement, il peut être prévu un ensemble d'éléments pilotables d'obturation positionné en regard des éléments optiques 4 de manière à permettre la sélection dynamique d'un rayon unique pour chaque pixel en permettant la sélection d'une association dans l'ensemble d'associations possibles. Les images étant formées par les éléments optiques 4 sur le détecteur 3, elles peuvent présenter des recouvrements,

Une autre façon de changer dynamiquement la géométrie des éléments optiques 4 est de positionner, comme illustré sur la figure 8, deux réseaux d'éléments optiques 41, 42 dans un même plan, et de positionner, devant chaque élément optique 4 du premier réseau 41 un filtre passe bande 61 ne laissant passer que les longueurs d'ondes dans une première bande de fréquence, et devant chaque élément optique 4 du second réseau 42 un filtre passe bande 62 ne laissant passer que les longueurs d'ondes dans une seconde bande de fréquence différente de la première bande de fréquence. Les réseaux 41 et 42 sont réalisés de façon à interdire à plus d'un rayon dans chaque bande de fréquence de parvenir à un pixel.

Avantageusement, l'association entre rayon et pixels est bi-univoque pour au moins 2 bandes spectrales, les associations correspondant à ces bandes spectrales différant pour au moins 1 pixels.

Ainsi, on conçoit d'abord deux configurations (ou plus) d'éléments optiques 4, présentant éventuellement des recouvrements entre les macropixels, et on passe dynamiquement d'une configuration à une autre, en changeant la longueur d'onde de la lumière issue du champ objet pour la faire correspondre à la longueur d'onde des filtres de la configuration voulue.

Avantageusement, il peut être prévu qu'un ensemble d'éléments de filtrage chromatique soit positionné en regard des éléments optiques 4 assure l'unicité du rayon correspondant à chaque pixel dans chacune des bandes spectrales, permettant d'obtenir une image ou plusieurs images du champ objet, les images formées par les éléments optiques 4 sur le détecteur 3 pouvant présenter des recouvrements.

A cours d'une étape de calibration, on détermine, pour chaque point du champ objet, les pixels sur lequel le point du champ objet est imagé. On associe à chaque point du champ objet, les pixels sur lequel ledit point du champ objet est imagé. Pour pouvoir déterminer les coordonnées 3D d'un point du champ objet, il faut au minimum que le point du champ objet soit imagé sur deux pixels différents.

Notamment, on peut effectuer la calibration en allumant un seul point du champ objet à la fois et en répertoriant les pixels du capteur photosensible 3 éclairés, et ce pour un échantillon de points de l'espace objet correspondant à la résolution souhaitée.

A cet effet, on positionne un écran dans un plan normal à la direction d'observation de la caméra 1, et déplace progressivement cet écran vers le capteur 3, par pas inférieurs à la résolution en distance recherchée.

Pour chaque position de cet écran, donc pour chaque distance à la caméra 1, on allume sélectivement chaque point de l'écran tour à tour. Pour chaque point de l'écran, on détermine au moins les deux pixels du capteur 3 les plus éclairés. Si leur niveau d'éclairement est suffisant, en pratique supérieur à un seuil choisi, on associe le point au couple de pixels éclairés. On crée ainsi une table associant à un point du champ objet le couple de pixels du capteur photosensible 2 sur lequel ledit point est imagé.

Un dispositif d'acquisition tridimensionnel, comporte une caméra plénoptique 1, et un calculateur 5 configuré pour déterminer, à partir de l'image fournie ou de l'ensemble d'images fournies par le capteur photosensible 3, une distance entre un point du champ objet et la caméra plénoptique 1.

Le calculateur 5 est configuré pour mettre en œuvre des étapes d'association et de reconstruction tridimensionnelle comme décrit ci-dessous.

A cours d'une étape d'association, le calculateur 5 associe entre eux les pixels différents qui correspondent au même point du champ objet. C'est cela qui permet la détermination des coordonnées 3D des points de la scène par triangulation.

Les pixels différents qui correspondent au même point du champ objet sont associés de façon classique.

A cours d'une étape de reconstruction tridimensionnelle, le calculateur 5 détermine, par triangulation, les coordonnées 3D des points du champ objet à partir des associations faites et des paramètres de calibration de la caméra plénoptique 1. Les points visibles sur les images étant les projections du point du champ objet, la position dans l'espace du point du champ objet est obtenue par intersection des rayons lumineux associés aux pixels images du point de champ objet.

## Revendications

1. Caméra plénoptique (1) comprenant un système optique qui reçoit de la lumière issue d'un champ objet dans lequel un espace objet est destiné à être traité via la caméra, un capteur photosensible matriciel (3) qui est composé de pixels arrangés en lignes et colonnes et tel que chaque pixel reçoit la lumière d'un seul rayon lumineux via le système optique, dans laquelle :
- son système optique comprend une optique de focalisation (2) ;
- son système optique comprend un réseau (40) d'éléments optiques (4) qui sont positionnés dans un plan image (F') situé entre l'optique de focalisation (2) et le capteur photosensible (3) ;
- chaque élément optique (4) forme sur le capteur photosensible (3) une image macropixel en faisant correspondre à chaque pixel son rayon lumineux associé;
- et dans laquelle les éléments optiques ont une structure irrégulière
et **caractérisée en ce que**:
- les éléments optiques (4) sont arrangés en lignes et en colonnes parallèles respectivement aux lignes et colonnes du capteur matriciel (3) en formant les intersections dans le champ objet ;
- la distance qui sépare deux lignes adjacentes du réseau d'éléments optiques et/ou la distance qui sépare deux colonnes adjacentes du réseau d'éléments optiques est irrégulière dans ledit réseau, cette distance étant distincte pour au moins deux paires de lignes adjacentes et/ou deux paires de colonnes adjacentes du réseau d'éléments optiques.

2. Caméra plénoptique (1) selon la revendication précédente, dans laquelle le réseau d'éléments optiques présente des irrégularités à la fois quant à la distance qui sépare deux lignes adjacentes du réseau et quant à la distance qui sépare deux colonnes adjacentes.

3. Caméra plénoptique selon l'une quelconque des revendications précédentes, dans laquelle la distance entre deux colonnes, respectivement lignes, adjacentes est fonction d'une valeur aléatoire, préférablement à l'aide d'un tirage d'une valeur aléatoire selon une loi uniforme sur un intervalle de valeurs prédéterminé.

4. Caméra plénoptique (1) selon l'une des revendications 1 à 3, dans laquelle d'une part l'image macropixel formée sur le capteur photosensible (3) s'étend sur au moins deux pixels dans la direction verticale et/ou dans la direction horizontale et d'autre part la distance irrégulière dans ledit réseau sépare deux lignes adjacentes du réseau d'éléments optiques en correspondance de leurs images macropixels d'au moins deux pixels dans la direction verticale et/ou sépare deux colonnes adjacentes du réseau d'éléments optiques en correspondance de leurs images macropixels d'au moins deux pixels dans la direction horizontale.

5. Caméra plénoptique (1) selon l'une des revendications 1 à 4, dans laquelle la distance entre deux lignes adjacentes et/ou deux colonnes adjacentes est choisie de manière aléatoire.

6. Caméra plénoptique (1) selon l'une des revendications 1 à 5, dans laquelle la distance entre deux lignes adjacentes et/ou deux colonnes adjacentes est choisie de manière aléatoire dans une gamme de valeurs comprise entre 95% et 105% d'une valeur moyenne.

7. Caméra plénoptique (1) selon l'une des revendications 1 à 6, dans laquelle les éléments optiques (4) sont des microlentilles.

8. Caméra plénoptique (1) selon l'une des revendications 1 à 6, dans laquelle les éléments optiques (4) sont des sténopés.

9. Caméra plénoptique (1) selon la revendication 1, dans laquelle l'association entre rayon et pixel est choisie dynamiquement dans un ensemble d'associations possibles et permet d'obtenir une image ou plusieurs images du champ objet.

10. Caméra plénoptique (1) selon la revendication 9, dans laquelle un ensemble d'éléments pilotables d'obturation positionné en regard des éléments optiques (4) permet la sélection dynamique d'un rayon unique pour chaque pixel en permettant la sélection d'une association dans l'ensemble d'associations possibles, les images étant formées par les éléments optiques (4) sur le détecteur (3) et pouvant présenter des recouvrements.

11. Caméra plénoptique (1) selon la revendication 1, dans laquelle l'association entre rayon et pixels est bi-univoque pour au moins 2 bandes spectrales, les associations correspondant à ces bandes spectrales différant pour au moins 1 pixels.

12. Caméra plénoptique (1) selon la revendication 11 et l'une quelconque des revendications précédentes, dans laquelle un ensemble d'éléments de filtrage chromatique positionné en regard des éléments optiques (4) assure l'unicité du rayon correspondant à chaque pixel dans chacune des bandes spectrales, permettant d'obtenir une image ou plusieurs images du champ objet, les images formées par les éléments optiques (4) sur le détecteur (3) pouvant présenter des recouvrements.

13. Dispositif d'acquisition tridimensionnelle, comportant une caméra plénoptique (1) selon l'une des revendications précédentes, et un calculateur (5) configuré pour déterminer, à partir de l'image fournie et/ou d'une série d'images fournies par la caméra plénoptique (1), une distance entre un point du champ objet et la caméra plénoptique (1).

14. Procédé de calibration d'une caméra plénoptique (1) selon l'une des revendications 1 à 12, comportant des étapes consistant à :
- allumer un seul point du champ objet ;
- répertorier les pixels du capteur photosensible (3) éclairés ;
- associer au point du champ objet les pixels du capteur photosensible (3) éclairés ;
- répéter les étapes précédentes pour un échantillon de points du champ objet.

## Patentansprüche

1. Plenoptische Kamera (1), umfassend ein optisches System, das Licht empfängt, das von einem Objektfeld ausgeht, in dem ein Objektbereich bestimmt ist, über die Kamera verarbeitet zu werden, einen photoempfindlichen Matrixsensor (3), der aus Pixeln zusammengesetzt ist, die in Zeilen und Spalten angeordnet sind und derart, dass jedes Pixel das Licht von einem einzigen Lichtstrahl über das optische System empfängt, wobei:
- ihr optisches System eine Fokussieroptik (2) umfasst;
- ihr optisches System ein Netzwerk (40) optischer Elemente (4) umfasst, die in einer Bildebene (F') positioniert sind, die sich zwischen der Fokussieroptik (2) und dem photosensiblen Sensor (3) befindet;
- jedes optische Element (4) auf dem photosensiblen Sensor (3) ein Makropixelbild bildet, indem es jedes Pixel mit seinem zugeordneten Lichtstrahl in Übereinstimmung bringt;
- und wobei die optischen Elemente eine unregelmäßige Struktur haben
und **dadurch gekennzeichnet, dass**:
- die optischen Elemente (4) in Zeilen und in Spalten angeordnet sind, die jeweils zu den Linien und Spalten des Matrixsensors (3) parallel sind, indem sie die Schnittpunkte im Objektfeld bilden;
- der Abstand, der zwei benachbarte Zeilen des Netzwerks optischer Elemente trennt und/oder der Abstand, der zwei benachbarte Spalten des Netzwerks optischer Elemente trennt, in dem Netzwerk unregelmäßig ist, wobei sich dieser Abstand für mindestens zwei Paare benachbarter Zeilen und/oder zwei Paare benachbarter Spalten des Netzwerks optischer Elemente unterscheidet.

2. Plenoptische Kamera (1) nach vorangehendem Anspruch, wobei das Netzwerk optischer Elemente sowohl im Hinblick auf den Abstand, der zwei benachbarte Zeilen des Netzwerks trennt, und im Hinblick auf den Abstand, der zwei benachbarte Spalten trennt, Unregelmäßigkeiten aufweist.

3. Plenoptische Kamera nach einem der vorangehenden Ansprüche, wobei der Abstand zwischen zwei benachbarten Spalten beziehungsweise Zeilen von einem Zufallswert abhängt, vorzugsweise mit Hilfe einer Ziehung eines Zufallswerts gemäß einem einheitlichen Gesetz über ein vorbestimmtes Werteintervall.

4. Plenoptische Kamera (1) nach einem der Ansprüche 1 bis 3, wobei zum einen sich das auf dem photosensiblen Sensor (3) gebildete Makropixelbild über mindestens zwei Pixel in der vertikalen Richtung und/oder in der horizontalen Richtung erstreckt und zum anderen der unregelmäßige Abstand im Netzwerk zwei benachbarte Zeilen des Netzwerks optischer Elemente übereinstimmend mit ihren Makropixelbildern um mindestens zwei Pixel in der vertikalen Richtung trennt und/oder zwei benachbarte Spalten des Netzwerks optischer Elemente übereinstimmend mit ihren Makropixelbildern um mindestens zwei Pixel in der horizontalen Richtung trennt.

5. Plenoptische Kamera (1) nach einem der Ansprüche 1 bis 4, wobei der Abstand zwischen zwei benachbarten Zeilen und/oder zwei benachbarten Spalten zufällig gewählt ist.

6. Plenoptische Kamera (1) nach einem der Ansprüche 1 bis 5, wobei der Abstand zwischen zwei benachbarten Zeilen und/oder zwei benachbarten Spalten aus einem Wertebereich zwischen 95% und 105% eines Mittelwerts zufällig gewählt ist.

7. Plenoptische Kamera (1) nach einem der Ansprüche 1 bis 6, wobei die optischen Elemente (4) Mikrolinsen sind.

8. Plenoptische Kamera (1) nach einem der Ansprüche 1 bis 6, wobei die optischen Elemente (4) Lochblenden sind.

9. Plenoptische Kamera (1) nach Anspruch 1, wobei die Zuordnung zwischen Strahl und Pixel dynamisch aus einer Gruppe möglicher Zuordnungen gewählt ist und erlaubt, ein Bild oder mehrere Bilder des Objektfelds zu erhalten.

10. Plenoptische Kamera (1) nach Anspruch 9, wobei eine Gruppe lenkbarer Verschlusselemente, die den optischen Elementen (4) zugewandt positioniert ist, die dynamische Auswahl eines einzigen Strahls für jedes Pixel durch Gestattung der Auswahl einer Zuordnung aus der Gruppe möglicher Zuordnungen erlaubt, wobei die Bilder von den optischen Elementen (4) auf dem Detektor (3) gebildet werden und Überlappungen aufweisen können.

11. Plenoptische Kamera (1) nach Anspruch 1, wobei die Zuordnung zwischen Strahl und Pixeln für mindestens 2 Spektralbänder eins zu eins ist, wobei die Zuordnungen, die diesen Spektralbändern entsprechen, für mindestens 1 Pixel unterschiedlich sind.

12. Plenoptische Kamera (1) nach Anspruch 11 und einem der vorangehenden Ansprüche, wobei eine Gruppe chromatischer Filterungselemente, die den optischen Elementen (4) zugewandt positioniert ist, die Eindeutigkeit des Strahls sichert, der jedem Pixel in jedem der Spektralbänder entspricht, was gestattet, ein Bild oder mehrere Bilder des Objektfelds zu erhalten, wobei die von den optischen Elementen (4) auf dem Detektor (3) gebildeten Bilder Überlappungen aufweisen können.

13. Dreidimensionale Aufnahmevorrichtung, aufweisend eine plenoptische Kamera (1) nach einem der vorangehenden Ansprüche und einen Rechner (5), der ausgelegt ist, um ausgehend von dem bereitgestellten Bild und/oder von einer Reihe von der plenoptischen Kamera (1) bereitgestellter Bilder einen Abstand zwischen einem Punkt des Objektfelds und der plenoptischen Kamera (1) zu bestimmen.

14. Verfahren zum Kalibrieren einer plenoptischen Kamera (1) nach einem der Ansprüche 1 bis 12, aufweisend die folgenden Schritte:
- Einschalten eines einzigen Punkts des Objektfelds;
- Identifizieren der beleuchteten Pixel des photosensiblen Sensors (3);
- Zuordnen der beleuchteten Pixel des photosensiblen Sensors (3) zum Punkt des Objektfelds;
- Wiederholen der vorangehenden Schritte für eine Probe von Punkten des Objektfelds.

## Claims

1. A plenoptic camera (1) comprising an optical system which receives light from an object field in which an object space is intended to be processed via the camera, a photosensitive matrix sensor (3) which is composed of pixels arranged in rows and columns and such that each pixel receives the light from a single light ray via the optical system, wherein:
- its optical system comprises focusing optics (2) ;
- its optical system comprises an array (40) of optical elements (4) which are positioned in an image plane (F') located between the focusing optics (2) and the photosensitive sensor (3);
- each optical element (4) forms on the photosensitive sensor (3) a macropixel image by matching each pixel to its associated light ray;
- and wherein the optical elements have an irregular structure
and **characterized in that**:
- the optical elements (4) are arranged in rows and in columns parallel respectively to the rows and columns of the matrix sensor (3) by forming the intersections in the object field;
- the distance which separates two adjacent rows of the array of optical elements and/or the distance which separates two adjacent columns of the array of optical elements is irregular in said array, this distance being distinct for at least two pairs of adjacent rows and/or two pairs of adjacent columns of the array of optical elements.

2. The plenoptic camera (1) according to the preceding claim, wherein the array of optical elements has irregularities both as to the distance which separates two adjacent rows of the array and as to the distance which separates two adjacent columns.

3. The plenoptic camera according to any one of the preceding claims, wherein the distance between two adjacent columns, respectively rows, is a function of a random value, preferably using a draw of a random value according to a uniform law over a predetermined range of values.

4. The plenoptic camera (1) according to one of claims 1 to 3, wherein on the one hand, the macropixel image formed on the photosensitive sensor (3) extends over at least two pixels in the vertical direction and/or in the horizontal direction and on the other hand, the irregular distance in said array separates two adjacent rows of the array of optical elements in correspondence with their macropixel images of at least two pixels in the vertical direction and/or separates two adjacent columns of the array of optical elements in correspondence with their macropixel images of at least two pixels in the horizontal direction.

5. The plenoptic camera (1) according to one of claims 1 to 4, wherein the distance between two adjacent rows and/or two adjacent columns is randomly selected.

6. The plenoptic camera (1) according to one of claims 1 to 5, wherein the distance between two adjacent rows and/or two adjacent columns is randomly selected in a range of values comprised between 95% and 105% of a mean value.

7. The plenoptic camera (1) according to one of claims 1 to 6, wherein the optical elements (4) are microlenses.

8. The plenoptic camera (1) according to one of claims 1 to 6, wherein the optical elements (4) are pinholes.

9. The plenoptic camera (1) according to claim 1, wherein the association between a ray and a pixel is dynamically selected in a set of possible associations and makes it possible to obtain one image or several images of the object field.

10. The plenoptic camera (1) according to claim 9, wherein a set of controllable shutter elements positioned facing the optical elements (4) allows the dynamic selection of a single ray for each pixel by allowing the selection of an association in the set of possible associations, the images being formed by the optical elements (4) on the detector (3) and being able to have overlaps.

11. The plenoptic camera (1) according to claim 1, wherein the association between a ray and pixels is one-to-one for at least two spectral bands, the associations corresponding to those spectral bands differing for at least one pixel.

12. The plenoptic camera (1) according to claim 11 and any one of the preceding claims, wherein a set of chromatic filter elements positioned facing the optical elements (4) ensures the uniqueness of the ray corresponding to each pixel in each of the spectral bands, allowing to obtain one image or several images of the object field, the images formed by the optical elements (4) on the detector (3) possibly having overlaps.

13. A three-dimensional acquisition device, including a plenoptic camera (1) according to one of the preceding claims, and a calculator (5) configured to determine, from the provided image and/or a series of images provided by the plenoptic camera (1), a distance between a point of the object field and the plenoptic camera (1).

14. A method for calibrating a plenoptic camera (1) according to one of claims 1 to 12, including steps of:
- lighting a single point of the object field;
- listing the illuminated pixels of the photosensitive sensor (3);
- associating the illuminated pixels of the photosensitive sensor (3) with the point of the object field;
- repeating the preceding steps for a sample of points of the object field.
